**Europäisches Patentamt**

**European Patent Office**

**Office européen des brevets**

(19)

(11) Veröffentlichungsnummer: **0 312 012**
**A2**

(12) # EUROPÄISCHE PATENTANMELDUNG

(21) Anmeldenummer: **88116937.9**

(22) Anmeldetag: **12.10.88**

(51) Int. Cl.4: **C08G 18/08 , C08G 18/10 , C08G 18/22**

(30) Priorität: **15.10.87 DE 3734984**

(43) Veröffentlichungstag der Anmeldung:
**19.04.89 Patentblatt 89/16**

(84) Benannte Vertragsstaaten:
**CH DE ES FR GB IT LI SE**

(71) Anmelder: **EMS-INVENTA AG**

**CH-8001 Zürich(CH)**

(72) Erfinder: **Abend, Thomas**
**Reherstrasse**
**CH-9016 St. Gallen(CH)**

(74) Vertreter: **Patentanwälte Müller-Boré, Deufel,**
**Schön, Hertel, Lewald, Otto**
**Isartorplatz 6**
**D-8000 München 2(DE)**

(54) **Lagerungsstabile feuchtigkeitshärtbare Klebe-, Dichtungs- und Beschichtungsmassen und Katalysator für ihre Vernetzung.**

(57) Die Erfindung betrifft lagerungsstabile feuchtigkeitshärtende Klebe-, Dichtungs und Beschichtungsmassen auf der Basis von lösungsmittelarmen feuchtigkeits-reaktiven Polyurethanprepolymeren und/oder -quasiprepolymeren, welche als Katalysatoren Antimon(III)-Verbindungen enthalten.

Diese Massen zeigen gegenüber unter Einsatz bekannter Katalysatoren hergestellten Massen eine erhöhte Reaktivität und Wärmestabilität

# Lagerungsstabile feuchtigkeitshärtbare Klebe-, Dichtungs- und Beschichtungsmassen und Katalysator für ihre Vernetzung

Die Erfindung betrifft unter Ausschluß von Feuchtigkeit lagerungsstabile Klebe-, Dichtungs- und Beschichtungsmassen auf der Basis von feuchtigkeitsreaktiven Polyurethanen und Katalysatoren zur Vernetzung derartiger Massen.

Klebe-, Dichtungs- und Beschichtungsmassen auf der Basis von feuchtigkeitsreaktiven Polyurethanprepolymeren und -quasiprepolymeren, die unter der Einwirkung von Feuchtigkeit vernetzen und zur Beschleunigung der Vernetzungsreaktion Katalysatoren enthalten, sind bekannt. Diese Massen werden in breitem Umfange zum Beschichten, Verbindung und Abdichten von Werkstoffen beispielsweise aus Metall, Keramik, Glas, Kunststoff, Holz, Beton und anderen Baustoffen verwendet. Besonders geeignet für diese Zwecke sind derartige Massen auf der Grundlage von Prepolymeren und/oder Quasiprepolymeren, die unter Einsatz von Diphenylmethan-4,4-diisocyanat, dessen Isomeren und Homologen hergestellt worden sind.

Besonders interessant sind solche Massen, die als lösungsmittelarme oder -freie 1-Komponenten-Massen verwendet werden können. Derartige Prepolymere und/oder Quasiprepolymere werden in bekannter Weise dadurch hergestellt, daß zwei- oder mehr-funktionelle Polyole mit einem Überschuß an Di- oder Polyisocyanat umgesetzt werden. Quasiprepolymere enthalten noch freies mono- oder oligomeres Di- oder Polyisocyanat. Das Prepolymere oder Quasiprepolymere enthält an den Kettenenden noch reaktionsfähige Isocyanatgruppen, welche die bekannten Reaktionen dieser Gruppen eingehen können, beispielsweise eine Umsetzung mit Luftfeuchtigkeit unter Bildung einer instabilen Carbaminsäuregruppe, die sich spontan in Amin und Kohlendioxid spaltet. Die entstehende Aminogruppe reagiert sehr schnell mit einer weiteren Isocyanatgruppe des Preoder Quasiprepolymeren. Diese Vernetzungsreaktion bedingt ein Molekülwachstum und führt zu einer Vernetzung unter Ausbildung einer starren oder elastischen Masse, die für Klebe-, Dichtungs- und Beschichtungszwecke geeignet ist.

Es ist auch bekannt, die feuchtigkeitsbedingte Vernetzungsreaktion derartiger Massen durch Zugabe von Katalysatoren zu beschleunigen. Bekannte Katalysatoren sind beispielsweise Dialkylzinndicarboxylate, Zinnoctanoat, Bleioctanoat, Phenylquecksilberverbindungen, Wismut-neodecanoat, Eisenacetylacetonat, tertiäre Amine sowie Mischungen mit einem oder mehreren derartigen Katalysatoren. Dabei werden die Katalysatoren im allgemeinen in Mengen bis zu drei Gew.-Teilen pro 100 Gew.-Teile des Polyurethanprepolymeren oder -quasiprepolymeren eingesetzt.

Werden große Katalysatormengen verwendet, um eine rasche Vernetzungsreaktion zu erzielen, dann wird die Lagerungsstabilität der gebrauchsfertigen Massen in der Weise beeinflußt, daß bei der Lagerung und beim Transport ein mehr oder weniger schneller Viskositätsanstieg stattfindet, der bis zur Gelbildung im Lager- oder Transportbehälter führen kann.

Ein weiterer Nachteil, der beim Einsatz großer Katalysatormengen in Kauf zu nehmen ist, liegt darin, daß die für die feuchtigkeitsreaktive Vernetzung besonders geeigneten Katalysatoren bereits bei Temperaturen von 120° C auch eine Depolymerisation der Massen beschleunigen, d.h. eine Spaltung von Urethanbindungen im vernetzten Polymeren bei Verarbeitungstemperaturen über 120° C.

Die Erfindung hat sich daher die Aufgabe gestellt, lagerungsstabile und unter Einwirkung von Feuchtigkeit vernetzbare Klebe-, Dichtungs- und Beschichtungsmassen auf der Basis von Polyurethanprepolymeren und/oder -quasiprepolymeren, deren Vernetzungsreaktion durch Katalysatoren beschleunigt wird, zu schaffen, denen nicht mehr die vorstehend geschilderten Nachteile der bekannten Massen anhaften, die eine hohe Lagerstabilität bei Raumtemperatur besitzen, bei denen die Reaktion zwischen dem Polyurethanprepolymern und/oder -quasiprepolymeren mit der Feuchtigkeit stark beschleunigt wird und welche eine verbesserte Wärmestabilität des bei dieser Reaktion entstandenen Polyurethans zeigen.

Diese Aufgabe wird durch die erfindungsgemäßen Klebe-, Dichtungs- und Beschichtungsmassen auf der Basis von feuchtigkeitsreaktiven Polyurethanprepolymeren und/oder -quasiprepolymeren gelöst, welche dadurch gekennzeichnet sind, daß sie als Katalysatoren Antimon(III)-Verbindungen enthalten.

Die erfindungsgemässen Massen können bei Verwendung geringer Anteile der erfindungsgemäßen Katalysator-Systeme als lösungsmittelarme Klebe-, Dichtungs- und Beschichtungsmassen eingesetzt werden. Ihre hervorragende Stabilität gestattet hohe Verarbeitungstemperaturen, ohne daß dabei die bekannten Einschränkungen infolge von Festigkeitsverlusten in Kauf zu nehmen sind.

Polyurethanprepolymere und/oder -quasiprepolymere, die erfindungsgemäß bevorzugt werden, lassen sich in bekannter Weise herstellen durch Umsetzung eines stöchiometrischen Überschusses von Diphenylmethandiisocyanat, dessen Isomeren oder Homologen mit di- oder polyfunktionellen aliphatischen oder aromatischen Polyol-, Polyamin-, Carboxyl- oder Mercaptogruppen enthaltenden polyfunktionellen Verbindungen, die ebenfalls bekannt sind.

EP 0 312 012 A2

Di- oder Polyisocyanate, die sich als Monomere, als Bestandteile von Prepolymeren oder Quasiprepolymeren besonders gut in den erfindungsgemässen Massen zur feuchtigkeitsreaktiven Vernetzung eignen, sind die verschiedenen Isomeren von Di isocyanatodiphenylmethan sowie Gemische aus zwei oder mehreren dieser Isomeren, Polyphenylpolymethylenpolyisocyanate sowie Gemische aus den isomeren Diisocyanatodiphenylmethanen und Polyphenylpolymethylenpolyisocyanaten. Geeignet sind ferner sogenannte modifizierte mehrwertige Isocyanate, d.h. Produkte, die durch chemische Umsetzung der vorstehend erwähnten Di- und/oder Polyisocyanate erhalten werden, beispielsweise Harnstoff-, Biuret-, Allophanat-, Carbodiimid-, Urethan-, Urethion- und/oder Isocyanuratgruppen-enthaltende Di- und/oder Polyisocyanate.

Wie bereits erwähnt, sind die Verfahren zur Herstellung der in den erfindungsgemäßen Massen eingesetzten Prepolymeren und Quasiprepolymeren bekannt. Sie bestehen im Prinzip darin, daß ein stöchiometrischer Überschuß der Isocyanate mit einen Unterschuß von beispielsweise Polyolen unter Ausschluß von Feuchtigkeit zur Reaktion gebracht wird. Diese Reaktion kann durch geeignete bekannte Katalysatoren oder Temperaturerhöhung beschleunigt werden.

Die in den erfindungsgemäßen Massen eingesetzten Katalysatoren sind Antimon(III)-Verbindungen. Es kann sich um anorganische und organische Verbindungen handeln, wobei im Falle von anorganischen Verbindungen diese in den vorliegenden organischen Medien wenigstens in einer solchen Konzentration löslich sein müssen, daß die gewünschte katalytische Wirkung erzielt wird.

Geeignete anorganische Verbindungen sind Antimon(III)halogenide und -oxyhalogenide, wie beipsielsweise Antimontrichlorid, Antimontribromid, Antimonoxychlorid etc., oder Anlagerungsprodukte derartiger Substanzen an Hydroxyverbin dungen, wie Alkohole, Glykole oder Polyhydroxyverbindungen.

Als organische Antimon(III)-Verbindungen werden Antimonsalze von Säuren mit gerad- oder verzweigtkettiger, aliphatischer aromatischer, oder aromatisch-aliphatischer Struktur bevorzugt. Die aliphatischen Ketten enthalten vorzugsweise 1 bis 22 Kohlenstoffatome, insbesondere 2 bis 18 Kohlenstoffatome.

Die aromatischen Reste sind gegebenenfalls mit Alkylresten mit 1 bis 12 Kohlenstoffatomen, insbesondere 1 bis 6 Kohlenstoffatomen, Halogenatomen, etc. substituierte aromatische Reste mit 6 bis 10 Kohlenstoffatomen, insbesondere Phenylreste oder Naphthylreste, wobei die funktionellen Gruppen, vorzugsweise Carboxylgruppen, am aromatischen oder aliphatischen Teil positioniert sind.

Insbesondere werden als Antimon(III)-Verbindungen Salze von aliphatischen Mono- oder Polycarbonsäuren mit 2 bis 16 Kohlenstoffatomen, insbesondere 2 bis 8 Kohlenstoffatomen, aromatischen Mono- oder Polycarbonsäuren und/oder von aromatisch-aliphatischen Mono- oder Polycarbonsäuren verwendet. Beispiele für derartige Antimon(III)-Salze sind folgende:

Antimontri-acetat, -hexanoat, -octanoat, -2-ethylhexanoat, -neodecanoat, -oleat, -phenylacetat, -benzoat, Antimondodecenylsuccinat, etc.

Die in den erfindungsgemäßen. Massen eingesetzten Katalysatoren können auch aus Gemischen aus zwei oder mehreren Antimon(III)-Verbindungen bestehen, ferner können zusätzlich andere anorganische, metallorganische oder organische Katalysatoren für Isocyanatadditionsreaktionen vorliegen, welche die Reaktivität der erfindungsgemäßen Massen erhöhen, ohne dabei deren Lagerstabilität oder Temperaturbeständigkeit zu beeinflussen. Zur Kombination mit den erfindungsgemäßen Katalysatoren eignen sich besonders die Alkali- oder Erdalkalisalze von aliphatischen oder aromatischen Carbonsäuren sowie tertiäre Amine.

Die erfindungsgemäßen Katalysatoren können dem Isocyanatausgangsgemisch, dem Quasiprepolymeren oder dem Prepolymeren gegebenenfalls nach Zusatz von Verdünnungsmittel und/oder Lösungsmittelzusatz zugemischt und darin homogen verteilt werden, worauf die erhaltene Masse bis zur Verwendung in Wasser- bzw. Wasserdampf-undurchlässigen Behältern aufbewahrt wird.

Der Zusatz der erfindungsgmäßen Katalysatoren zu den erfindungsgemäßen Massen erfolgt in Mengen, die einem Gehalt von bis zu 1 Gew.-% an gelöstem Antimon in der fertigen Reaktionsmischung entsprechen. Besonders geeignet sind Katalysatorkonzentrationen entsprechend einem gelösten Antimongehalt von 0,01 bis 0,2 Gew.-% in der verarbeitungsfertigen Masse.

Die erfindungsgemäßen Massen können übliche Additive oder Hilfsstoffe enthalten, beispielsweise Weichmacher, Füllstoffe, Pigmente, Farbstoffe, Netzmittel, Stabilisatoren, Entlüftungsmittel, Alterungsschutzmittel oder Gemische davon. Die Art und Menge der Zusatzstoffe richtet sich nach dem Verwendungszweck der erfindungsgemäßen Massen.

Bei der Konfektionierung der erfindungsgemäßen Massen ist die Aufnahme von Feuchtigkeit zu vermeiden und auch darauf zu achten, daß durch Additive oder Hilfsstoffe keine Feuchtigkeit eingebracht wird. Um eventuell vorhandene Feuchtigkeit zu binden, ist es zweckmäßig, den Massen wasserbindende oder mit Wasser reagierende Mittel zuzusetzen, wie Molekularsiebpulver, oder Kalziumoxid, oder chemisch mit Wasser reagierende Mittel, wie p-Toluolsulfonylisocyanat, Ortho-Ameisensäureester, Alkoholate etc.

Die Konfektionierung der erfindungsgemäßen Massen wird in analoger Weise zu der Konfektionierung bekannter Massen durchgeführt.

Das folgende Beispiel erläutert die Erfindung.

Herstellung des Prepolymeren.

In einem heiz- und kühlbaren Glaskolben, der mit einem Rührwerk versehen war, wurden bei einer Temperatur von 50°C 332,3 g (2,66 Val) 4,4-Diphenylmethandiisocyanat aufgeschmolzen und zum geschmolzenen Isocyanat 1200 g (1,2 Val) eines Polyoxypropylendiols vom Molekulargewicht 2000 zugegeben. Unter Rühren wurden dann 0,15 g Benzoylchlorid zugesetzt. Anschließend wurde das Gemisch auf 80°C erwärmt und während 2 Stunden unter Rühren auf dieser Temperatur gehalten. Das dabei gebildete lineare Prepolymere enthielt 3,9 % Isocyanatgruppen bei einem theoretischen Sollwert von 4,0 %. Das Gemisch wurde nun auf 50°C gekühlt und man mischte 427 g Diisononylphthalat und 600 g (0,367 Val) eines Polyoxypropylentriols mit einem Molekulargewicht von ca. 4900 zu. Anschließend wurde noch 0,36 g Zinnoctanoat zugegeben, worauf die Temperatur infolge der exothermen Reaktion auf 59°C anstieg, um dann wieder abzufallen. Das Gemisch wurde bei 55°C während 1 1/2 Stunden weitergerührt, dann abgekühlt und in feuchtigkeitsundurchlässige Behälter unter Stickstoffatmosphäre abgefüllt. Das Produkt wies einen Isocyanatgehalt von 1,63 % auf bei errechnetem Sollwert von 1,79 %.

Herstellung einer Klebedichtungsmasse.

In einem Vakuum-Planetenmischer wurden unter Vakuum 1654,5 g des obigen Prepolymeren mit 4 g Paratoluolsulfonylisocyanat bei Raumtemperatur während 1/4 Stunde gemischt. Anschließend wurde ein Füllstoffgemisch aus 590 g Ofenruß und 425 g Kaolin, das zuvor 12 Stunden lang bei 160°C im Vakuum getrocknet worden war, zugesetzt, außerdem wurden weitere 200 g Phthalsäureester von linearen aliphatischen Alkoholen mit 8 bis 12 Kohlenstoffatomen und die Katalysatoren, gelöst in 112,5 g Toluol, zugefügt und die Mischung während 1 Stunde am Vakuum vermischt. Danach wurde nochmals während 5 Minuten evakuiert, worauf mit Stickstoff der Druckausgleich herbeigeführt wurde und das Gemisch in Metallkartuschen abgefüllt wurde.

Unter Einsatz von drei erfindungsgmäßen Katalysatoren (Beispiele 1, 4 und 5) und 2 Katalysatoren nach dem Stand der Technik (Beispiele 2 und 3) wurden Klebedichtungsmassen gemäß folgender Tabelle hergestellt.

| Katalysator | | Beispiele | | | | |
|---|---|---|---|---|---|---|
| | | 1 | 2 | 3 | 4 | 5 |
| Antimon-Neodecanoat | Metallkonzentration | 0,05% | - | - | 0,11% | 0,08% |
| Wismuth-Neodecanoat | | - | 0,11% | - | - | - |
| Dibutylzinndilaurat | | - | - | 0,5%- | - | - |
| N,N'-Dimethylaminoethylether | | | | | 0,15% | - |
| Kalium-Octanoat | | - | - | - | - | 0,02% |

Ergebnisse

Es wurden einerseits die Hautbildungszeit und andererseits die Abnahme der Festigkeit bei Hochtemperaturlagerung bestimmt.

Zur Bestimmung der Hautbildungszeit wurden die Klebedichtungsmassen mit einer Rakel zu einer 2 mm dicken Folie ausgestrichen. Die Hautbildungszeit wurde bestimmt, indem in regelmäßigen Intervallen die Oberfläche dieser Folien mit dem Finger leicht berührt wurde. Als Hautbildungszeit wurde die bis zu dem Moment verstrichene Zeit bezeichnet, bei dem das Berühren der schwarzen Klebedichtungsmsse am Finger keinen schwarzen Rückstand hinterließ.

| Hautbildungszeit | |
|---|---|
| Klebedichtungsmasse 1 | 10 Minuten |
| Klebedichtungsmasse 2 | 28 Minuten |
| Klebedichtungsmasse 3 | 25 Minuten |
| Klebedichtungsmasse 4 | 4 Minuten. |
| Klebedichtungsmasse 5 | 8 Minuten |

Zur Bestimmung des Hochtemperaturverhaltens wurden Hantelproben S2 gemäß DIN 53504 vor und nach Alterung bei 140°C im Umluftofen einem Zugversuch unterworfen. Dabei wurden folgende Resultate erzielt.

| | Eigenschaften | Einheit | vor | Lagerdauer | | |
|---|---|---|---|---|---|---|
| | | | | 2h | 4h | 24h |
| Klebedichtungsmasse 1 | Bruchfestigkeit | MPa | 10,3 | 6,5 | 4,5 | 2,9 |
| | Bruchdehnung | % | 680 | 575 | 510 | 290 |
| | Modul 100% | MPa | 2,5 | 1,3 | 1,2 | 1,9 |
| Klebedichtungsmasse 2 | Bruchfestigkeit | MPa | 5,9 | 0,7 | 0,7 | 1,0 |
| | Bruchdehnung | % | 640 | 80 | 30 | 15 |
| | Modul 100% | MPa | 1,5 | nicht mehr meßbar | | |
| Klebedichtungsmasse 3 | Bruchfestigkeit | MPa | 7,8 | | | |
| | Bruchdehnung | % | 570 | nicht mehr meßbar | | |
| | Modul 100% | MPa | 1,9 | | | |
| Klebedichtungsmasse 4 | Bruchfestigkeit | MPa | 6,6 | 3,45 | 2,0 | 1,75 |
| | Bruchdehnung | % | 730 | 575 | 440 | 260 |
| | Modul 100% | MPa | 1,3 | 0,9 | 0,8 | 1,2 |
| Klebedichtungsmasse 5 | Bruchfestigkeit | MPa | 8,2 | 5,1 | 3,5 | 1,9 |
| | % | | 610 | 510 | 440 | 270 |
| | Modul 100% | MPa | 2,1 | 1,1 | 1,0 | 1,5 |

Der Abfall der Bruchfestigkeit und Bruchdehnung durch Lagerung bei 140°C auf 50 % des Ausgangswertes ist somit nach folgenden Zeiten erreicht:

| Halbwertszeit bei 140°C in Stunden | | |
|---|---|---|
| | Bruchfestigkeit | Bruchdehnung |
| Klebedichtungsmasse 1 | 4 | 15 |
| Klebedichtungsmasse 2 | 1 | 1 |
| Klebedichtungsmasse 3 | 1 | 1 |
| Klebedichtungsmasse 4 | 3 | 12 |
| Klebedichtungsmasse 5 | 3 | 10 |

Diese Beispiele zeigen die erhöhte Reaktivität sowie die gesteigerte Wärmestabilität der erfindungsgemäßen, eine Antimon (III)-Verbindung als Katalysator enthaltenden Massen gegengegenüber Massen, die herkömmliche Katalysatoren enthalten.

**Ansprüche**

1. Lagerungsstabile feuchtigkeitshärtende Klebe-, Dichtungsund Beschichtungsmassen auf der Basis von feuchtigkeitsreaktiven Polyurethanprepolymeren und/oder -quasiprepolymeren, dadurch gekennzeichnet, daß sie als Katalysatoren Antimon(III)-Verbindungen enthalten.

2. Massen nach Anspruch 1, dadurch gekennzeichnet, daß die Katalysatoren aus organischen Antimon-(III)-Verbindungen bestehen.

3. Massen nach den Ansprüchen 1 bis 2, dadurch gekennzeichnet, das die Katalysatoren aus Antimon-(III)-Salzen von Säuren mit gerad- oder verzweigtkettiger aliphatischer, aromatischer oder aromatisch-aliphatischer Struktur bestehen.

4. Massen nach den Ansprüchen 1 bis 3, dadurch gekennzeichnet, daß die Katalysatoren aus geradkettigen oder verzweigten aliphatischen Mono- oder Polycarbonsäuren, aromatischen Carbonsäuren und/oder aromatischaliphatischen Carbonsäuren bestehen.

5. Massen nach den Ansprüchen 1 bis 4, dadurch gekennzeichnet, daß die Katalysatoren aus in organischen Medien löslichen anorganischen Antimon(III)-Verbindungen bestehen.

6. Massen nach den Ansprüchen 1 bis 5, dadurch gekennzeichnet, daß sie zusätzlich anorganische, metallorganische und/oder organische Katalysatoren enthalten.

7. Massen nach den Ansprüchen 1 bis 6, dadurch gekennzeichnet, daß die Antimon(III)-Katalysatoren in solchen Mengen vorliegen, daß der Gehalt des in der Reaktionsmischung gelösten Antimons bis zu 1 Gew.-%, vorzugsweise 0,01 bis 0,2 Gew.-%, beträgt.

8. Massen nach den Ansprüchen 1 bis 7, dadurch gekennzeichnet, daß sie außerdem Additive und oder Hilfsstoffe enthalten.

9. Massen nach den Ansprüchen 1 bis 8, dadurch gekennzeichnet, daß sie zusätzlich wasserbindende oder mit Wasser reagierende Mittel enthalten.

10. Katalysator zur Vernetzung der Massen gemäß Anspruch 9, gekennzeichnet, durch eine oder mehrere Antimon(III)-Verbindungen.